# FASCICULE DE BREVET EUROPEEN

(11) **EP 1 243 808 B1**
(45) Date de publication et mention de la délivrance du brevet: **14.01.2009**
(21) Numéro de dépôt: 02290713.3
(22) Date de dépôt: 21.03.2002
(51) Int. Cl.: F16D 66/02

(54) **Détecteur d'usure de garniture de friction, et procédé de détection d'usure pour un tel dispositif**
Verschleisssensor für einen Reibbelag sowie Verfahren zur Verschleissmessung mit einem solchen Sensor
Friction lining wear sensor and procedure for the detection of wear by such a sensor

(30) Priorité: 23.03.2001 FR 0104052
(43) Date de publication de la demande: 25.09.2002
(73) Titulaire: ROBERT BOSCH GMBH, 70442 Stuttgart (DE)
(72) Inventeur: Bourlon, Philippe, 77230 Dammartin en Goele (FR); Gendrin, Stéphane, 35170 Bruz (FR); Quirant, Werner, 71717 Beilstein (DE)
(74) Mandataire: Hurwic, Aleksander Wiktor

(56) Documents cités:
- EP-A- 0 704 639
- DE-A- 4 403 608
- DE-C- 4 137 737
- US-A- 4 569 600
- US-A- 4 884 434
- US-A- 5 372 221

## Description

L'invention concerne, de façon générale, les systèmes de freinage à friction pour véhicules à moteur.

Plus précisément, l'invention concerne un dispositif d'absorption d'énergie cinétique pour véhicule à moteur, comprenant un premier organe de friction et un détecteur d'usure, le premier organe de friction portant une couche de matériau de friction d'épaisseur variable en fonction d'une usure qu'il subit, et le détecteur d'usure comprenant un récepteur d'état, sensible à au moins deux états d'usure différents du premier organe de friction, et une ligne de transmission, dont une première extrémité est reliée au récepteur d'état, et à une seconde extrémité de laquelle l'état d'usure du premier organe de friction est rendu accessible.

Ces dispositifs, dans lesquels le premier organe de friction est par exemple constitué par une plaquette de frein à disque, sont connus et utilisés depuis des décennies.

En général, la ligne de transmission est constituée par un conducteur électrique dont une boucle forme le récepteur d'état.

Après usure de la couche ou garniture de matériau de friction, cette boucle rentre en contact galvanique avec le disque de friction métallique, dont le potentiel électrique est ainsi recopié à la seconde extrémité du conducteur électrique.

Cette technique, bien qu'éprouvée, suppose que des mesures soient prises pour éviter toute altération des contacts galvaniques, notamment sous l'effet des pollutions et corrosions diverses que les freins ont à subir.

De surcroît, dans le cas où le disque de friction n'est pas électriquement conducteur, cette technique n'est pas utilisable.

Par ailleurs, DE 41 37 737, décrit un dispositif de lecture optique de la déformation mécanique d'un élément, la déformation mécanique étant provoquée par l'usure des éléments de friction.

Dans ce contexte, l'invention a pour but, selon un premier de ses aspects, de proposer un dispositif d'absorption d'énergie cinétique par friction doté d'un détecteur d'usure, qui ne présente pas les limitations précédemment évoquées.

A cette fin, le dispositif de l'invention, par ailleurs conforme à la définition générique qu'en donne le préambule ci-dessus, est essentiellement caractérisé en ce que le premier organe de friction comprend un support plan sur une face interne duquel est déposée la couche de matériau de friction, et le récepteur d'état fait saillie de la face interne du support plan, et le récepteur d'état et la ligne de transmission sont transparents à des rayons lumineux que le second organe de friction réfléchit.

Ce récepteur d'état peut notamment être au moins partiellement noyé dans la couche de matériau de friction.

L'invention est notamment applicable au cas où le dispositif d'absorption d'énergie cinétique comprend un second organe de friction sur lequel le premier organe de friction est sélectivement appliqué avec un mouvement relatif de frottement, et où ce second organe de friction est au moins partiellement constitué par un matériau diélectrique, et prend par exemple la forme d'un disque au moins partiellement réalisé en céramique.

Le récepteur d'état comprend avantageusement un insert optique présentant une face active séparée de la face interne du support plan par une distance représentant une garde de sécurité pour l'usure du premier organe de friction.

Le détecteur d'usure peut lui-même comprendre un capteur de variation d'intensité lumineuse disposé à la seconde extrémité du guide ou de la fibre optique.

En outre, le détecteur d'usure peut comprendre un coupleur optique installé sur le guide ou la fibre optique, et une source de lumière couplée au guide ou à la fibre optique par l'intermédiaire du coupleur optique.

De préférence, le coupleur et la source de lumière sont disposés à la seconde extrémité de la ligne de transmission.

L'invention concerne également un procédé de détection d'usure d'un premier organe de friction sélectivement appliqué sur un second organe de friction en mouvement relatif avec le premier, ce procédé étant essentiellement caractérisé en ce qu'il comprend une première opération consistant à interposer dans un chemin optique une couche opaque susceptible d'être érodée par friction mutuelle des premier et second organes de friction, et une seconde opération consistant à détecter l'érosion de la couche opaque par variation de densité optique du chemin optique.

La première opération peut par exemple être réalisée en utilisant, en tant que couche opaque, une couche d'un matériau de friction.

D'autres caractéristiques et avantages ressortiront clairement de la description qui en est faite ci-après, à titre indicatif et nullement limitatif, en référence aux dessins annexés, dans lesquels :
- la Figure 1 est une vue schématique partielle en coupe d'un dispositif conforme à l'invention;
- la Figure 2 est une vue d'un détecteur d'usure mis en oeuvre dans un dispositif conforme à l'invention; et
- la Figure 3 est une vue partielle en plan d'une variante d'un dispositif conforme à l'invention.

Comme annoncé précédemment, l'invention concerne un dispositif d'absorption d'énergie cinétique pour véhicule à moteur, incluant au moins un premier organe de friction telle qu'une plaquette 1 de frein à disque, et un détecteur d'usure 3.

Ce dispositif peut également comprendre un second organe de friction, prenant par exemple la forme d'un disque de friction 2, qui est entraîné en rotation avec une roue (non représentée) du véhicule.

Comme le comprendra l'homme de l'art à la lecture de la présente description, le second organe de friction 2 pourrait aussi, par exemple, prendre la forme d'un tambour, et le premier organe de friction 1 la forme d'un segment de frein à tambour, la référence à un frein à disque dans la suite de la description n'étant donc nullement limitative.

La plaquette 1 porte une couche 10 de matériau de friction dont l'épaisseur E varie en fonction de l'usure que subit cette couche par frottement sur le disque 2.

Le détecteur d'usure 3 comprend, à proximité du disque 2, un récepteur d'état 4 qui est par exemple sensible à deux états d'usure différents de la plaquette 1, et dont l'environnement est ainsi différent selon que l'usure de la plaquette est en deçà ou au-delà d'une limite recommandée d'usure maximum.

Le détecteur d'usure 3 comprend également une ligne de transmission 5, dont une première extrémité 51 est reliée au récepteur d'état 4, cette ligne 5 étant conçue pour rendre accessible, sur son autre extrémité 52, l'information que représente l'état d'usure de la plaquette 1.

Selon l'invention, la ligne de transmission 5 comprend un guide ou une fibre optique, ou est intégralement constituée d'un tel guide ou d'une telle fibre.

En particulier, la ligne de transmission 5 peut avantageusement prendre la forme d'une fibre optique réalisée dans un matériau polymère, le récepteur d'état 4 pouvant quant à lui prendre la forme d'un insert optique, par exemple réalisé en vitro-céramique.

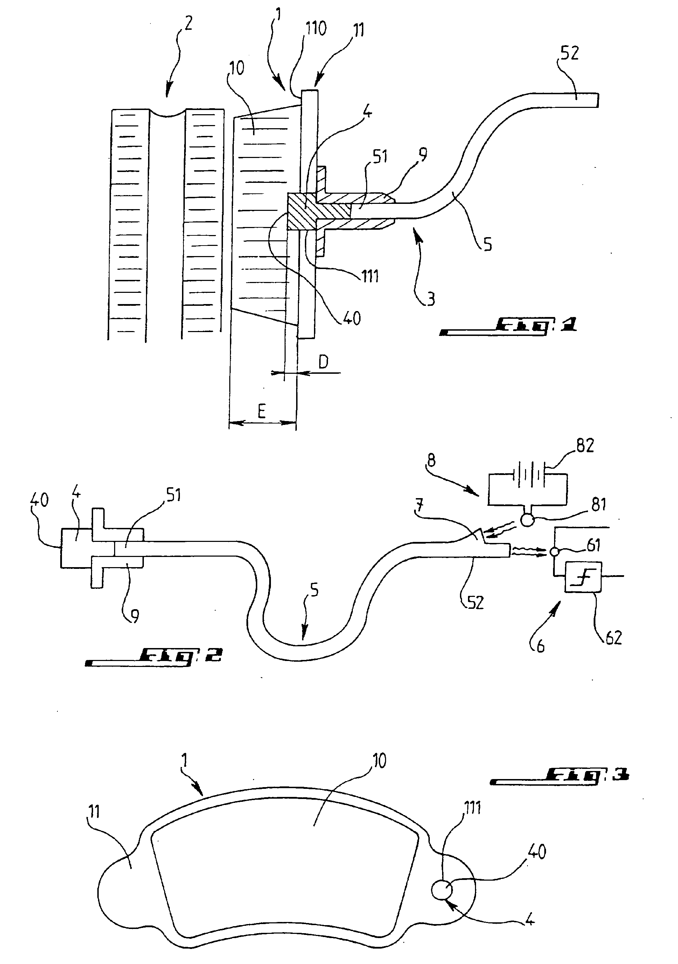

Comme le montrent les figures 1 et 3, la plaquette 1 comprend un support plan 11, en général constitué d'un flan d'acier, et la couche de matériau de friction 10 est déposée sur la face interne 110 de ce support, l'insert 4 faisant saillie de cette face interne 110 en direction du disque 2.

L'insert 4 peut être au moins partiellement noyé dans la couche 10 de matériau de friction, comme le montre la figure 1, auquel cas il est recouvert de matériau de friction, au moins jusqu'à l'usure limite de la plaquette 1.

L'insert 4 peut aussi être disposé extérieurement à la couche 10 de matériau de friction, comme le montre la figure 3, auquel cas il est recouvert d'une couche d'un matériau opaque, tel qu'une peinture.

Dans tous les cas, il est judicieux de disposer l'insert 4 de manière que sa face active 40, qui est tournée vers le disque 2, soit séparée de la face interne 110 du support plan 11 par une distance minimum D qui correspond à la valeur minimum recommandée de l'épaisseur E de la couche 10 et représente donc une garde de sécurité pour l'usure de la plaquette 1.

Par exemple, l'insert 4 traverse un orifice pratiqué 111 dans le support 11 et y est maintenu grâce à un dispositif de fixation 9.

L'invention est notamment applicable au cas où l'organe de friction 2 est au moins partiellement constitué par un matériau diélectrique, et prend par exemple la forme d'un disque au moins partiellement réalisé en céramique.

La fibre 5 est couplée optiquement à l'insert 4, l'un et l'autre étant transparents ou au moins translucides pour des rayons lumineux que le disque 2 a la propriété de réfléchir.

Comme le montre la figure 2, le détecteur d'usure 3 comprend de préférence un capteur de variation d'intensité lumineuse 6, qui est disposé à l'extrémité 52 du guide ou de la fibre optique 5 qui est distante du disque 2.

Pour améliorer la fiabilité de la détection, le détecteur d'usure 3 peut aussi comprendre un coupleur optique 7 installé sur le guide ou la fibre optique 5, et une source de lumière 8.

Le coupleur 7, et la source de lumière 8, qui est couplée au guide ou à la fibre optique 5 par l'intermédiaire du coupleur optique 7, sont adéquatement disposés à l'extrémité 52 du guide ou de la fibre optique 5 qui est distante du disque 2.

La source de lumière 8 comprend par exemple un composant semi-conducteur 81, tel qu'une diode photoémettrice alimentée en énergie électrique par une source électrique 82.

Le capteur de variation d'intensité lumineuse 6 peut, quant à lui, comprendre un composant semi-conducteur 61, tel qu'une diode photo-réceptrice, propre à fournir un signal de sortie représentatif de l'intensité lumineuse reçue par ce composant, et un circuit électronique 62 de détection de franchissement de seuil.

Le fonctionnement du dispositif précédemment décrit est le suivant.

Tant que l'épaisseur de la couche de matériau 10 portée par la plaquette 1 est supérieure à la limite D, la face active 40 de l'insert optique 4 reste recouverte d'une couche opaque, constituée soit par le matériau de friction lui-même dans le mode de réalisation illustré à la figure 1, soit par une couche de peinture ou de vernis approprié dans le mode de réalisation illustré à la figure 3.

Dans ce cas, la lumière injectée dans la fibre 5 par la source 8 est absorbée, au moins pour la plus grande part, par cette couche opaque, de sorte que le signal de sortie de la diode réceptrice 61 est trop faible pour être détecté par le circuit électronique 62.

Lorsque l'usure de la couche de matériau 10 est telle que la face active 40 vient frotter sur le disque 2, la couche opaque résiduelle qui la revêt est érodée par le disque 2, et la lumière injectée dans la fibre 5 par la source 8 émerge de la face active 40 de l'insert 4 et vient frapper le disque 2.

Le faisceau émergeant de l'insert 4 se trouve ainsi réfléchi par le disque, et une fraction de ce faisceau retourne dans la fibre 5, à l'extrémité 52 de laquelle elle est détectée par le capteur de variation d'intensité lumineuse 6.

L'invention concerne donc également un procédé pour détecter l'usure d'un organe de friction tel qu'une plaquette 1, sélectivement appliqué sur un autre organe de friction, tel qu'un disque 2 en mouvement relatif avec la plaquette 1.

Pour mettre en oeuvre ce procédé, il convient tout d'abord d'interposer, dans le chemin optique que représente par exemple le trajet aller-retour de la lumière depuis la source 8 jusqu'au capteur 6 en passant par la réflexion sur le disque 2, une couche opaque susceptible d'être érodée par friction mutuelle des organes de friction 1 et 2, par exemple la couche 10 de matériau de friction, ou la couche de peinture, qui recouvre initialement la face active 40 de l'insert 4.

Dans ces conditions, le procédé comprend une seconde opération, qui consiste à détecter l'érosion de la couche opaque par variation de densité optique du chemin optique, la disparition de la couche opaque marquant le passage d'un état d'usure acceptable de la plaquette 1 à un état d'usure dans lequel la plaquette doit être remplacée.

## Revendications

1. Dispositif d'absorption d'énergie cinétique pour véhicule à moteur, comprenant un premier organe de friction (1), un second organe de friction (2) et un détecteur d'usure (3), le premier organe de friction (1) portant une couche (10) de matériau de friction d'épaisseur (E) variable en fonction d'une usure qu'il subit, et le détecteur d'usure (3) comprenant un récepteur d'état (4), sensible à au moins deux états d'usure différents du premier organe de friction (1), et une ligne de transmission (5), dont une première extrémité (51) est reliée au récepteur d'état (4), et à une seconde extrémité (52) de laquelle l'état d'usure du premier organe de friction (1) est rendu accessible, la ligne de transmission (5) comprend un guide ou une fibre optique et en ce que le récepteur d'état (4) est au moins partiellement noyé dans la couche (10) de matériau de friction, **caractérisé en ce que** le premier organe de friction (1) comprend un support plan (11) sur une face interne (110) duquel est déposée la couche de matériau de friction (10), et **en ce que** le récepteur d'état (4) fait saillie de la face interne (110) du support plan (11) et **en ce que** le récepteur d'état (4) et la ligne de transmission (5) sont transparents à des rayons lumineux que le second organe de friction (2) réfléchit.

2. Dispositif d'absorption d'énergie cinétique suivant la revendication précédente, **caractérisé en ce qu'**il comprend un second organe de friction (2) sur lequel le premier organe de friction (1) est sélectivement appliqué avec un mouvement relatif de frottement, et **en ce que** le second organe de friction (2) est au moins partiellement constitué par un matériau diélectrique.

3. Dispositif d'absorption d'énergie cinétique suivant la revendication 2, **caractérisé en ce que** le second organe de friction (2) est un disque au moins partiellement réalisé en céramique.

4. Dispositif d'absorption d'énergie cinétique suivant l'une quelconque des revendications précédentes combinée à la revendication 1, **caractérisé en ce que** le récepteur d'état (4) comprend un insert optique présentant une face active (40) séparée de la face interne (110) du support plan (11) par une distance (D) représentant une garde de sécurité pour l'usure du premier organe de friction (1).

5. Dispositif d'absorption d'énergie cinétique suivant l'une quelconque des revendications précédentes, **caractérisé en ce que** le détecteur d'usure (3) comprend un capteur de variation d'intensité lumineuse (6) disposé à la seconde extrémité (52) du guide ou de la fibre optique (5).

6. Dispositif d'absorption d'énergie cinétique suivant l'une quelconque des revendications précédentes, **caractérisé en ce que** le détecteur d'usure (3) comprend un coupleur optique (7) installé sur le guide ou la fibre optique (5), et une source de lumière (8) couplée au guide ou à la fibre optique (5) par l'intermédiaire du coupleur optique (7).

7. Dispositif d'aborption d'énergie cinétique suivant la revendication 6, **caractérisé en ce que** le coupleur (7) et la source de lumière (8) sont disposés à la seconde extrémité (52) de la ligne de transmission (5).

8. Procédé de détection d'usure pour un dispositif d'absorption d'energie cinétique suivant quelconque des revendications précédentes, comprenant un premier organe de friction (1) sélectivement appliqué sur un second organe de friction (2) en mouvement relatif avec le premier (1), **caractérisé en ce qu'**il comprend une première opération consistant à interposer dans un chemin optique une couche opaque (10) susceptible d'être érodée par friction mutuelle des premier et second organes de friction (1, 2), et une seconde opération consistant à détecter l'érosion de la couche opaque (10) par variation de densité optique du chemin optique.

9. Procédé de détection suivant la revendication **8**, **caractérisé en ce que** la première opération est réalisée en utilisant, en tant que couche opaque, une couche (10) d'un matériau de friction.

## Claims

1. Device for absorbing kinetic energy for a motor vehicle, comprising a first friction member (1), a second friction member (2), and a wear detector (3), the first friction member (1) bearing a layer (10) of friction material of a thickness (E) that varies according to how worn it is, and the wear detector (3) comprising a state receiver (4), sensitive to at least two different states of wear of the first friction member (1), and a transmission line (5), a first end (51) of which is connected to the state receiver (4), and at a second end (52) of which the state of wear of the first friction member (1) is made available, the transmission line (5) comprises a guide or an optical fibre and in that the state receiver (4) is at least partially embedded in the layer (10) of friction material, **characterized in that** the first friction member (1) comprises a flat support (11) on an internal face (110) of which the layer of friction material (10) is deposited, and **in that** the state receiver (4) projects from the internal face (110) of the flat support (11) and **in that** the state receiver (4) and the transmission line (5) are transparent to rays of light that the second friction member (2) reflects.

2. Device for absorbing kinetic energy according to the preceding claim, **characterized in that** it comprises a second friction member (2) against which the first friction member (1) is selectively applied with a relative frictional movement, and **in that** the second friction member (2) is made at least partially of a dielectric material.

3. Device for absorbing kinetic energy according to Claim 2, **characterized in that** the second friction member (2) is a disc made at least partially of ceramic.

4. Device for absorbing kinetic energy according to any one of the preceding claims combined with Claim 1, **characterized in that** the state receiver (4) comprises an optical insert having an active face (40) separated from the internal face (110) of the flat support (11) by a distance (D) representing a safety margin for the wear of the first friction member (1).

5. Device for absorbing kinetic energy according to any one of the preceding claims, **characterized in that** the wear detector (3) comprises a sensor (6) that senses variation in light intensity and is arranged at the second end (52) of the guide or of the optical fibre (5).

6. Device for absorbing kinetic energy according to any one of the preceding claims, **characterized in that** the wear detector (3) comprises an optical coupler (7) installed on the guide or the optical fibre (5), and a light source (8) coupled to the guide or to the optical fibre (5) via the optical coupler (7).

7. Device for absorbing kinetic energy according to Claim 6, **characterized in that** the coupler (7) and the light source (8) are arranged at the second end (52) of the transmission line (5).

8. Method of detecting wear for a device for absorbing kinetic energy according to any one of the preceding claims, comprising a first friction member (1) selectively applied against a second friction member (2) in relative motion with respect to the first (1), **characterized in that** it comprises a first operation which consists in inserting into an optical path an opaque layer (10) that can be worn away by friction of the first and second friction members (1, 2) on each other, and a second operation which consists in detecting the wearing-away of the opaque layer (10) through the variation in optical density of the optical path.

9. Detection method according to Claim 8, **characterized in that** the first operation is performed using a layer (10) of a friction material by way of opaque layer.

## Patentansprüche

1. Vorrichtung zur Aufnahme von kinetischer Energie für Motorfahrzeug, mit einem ersten Reibungselement (1), einem zweiten Reibungselement (2) und einem Verschleißsensor (3), wobei das erste Reibungselement (1) eine Schicht (10) Reibungsmaterial trägt, deren Dicke (E) je nach dem von ihm erfahrenen Verschleiß variabel ist, und wobei der Verschleißsensor (3) einen Zustandsempfänger (4), der bei mindestens zwei verschiedenen Verschleißzuständen des ersten Reibungsorgans (1) empfindlich ist, und eine Übertragungsleitung (5) aufweist, bei der ein erstes Ende (51) mit dem Zustandsempfänger (4) verbunden ist und der Verschleißzustand des ersten Reibungselements (1) an einem zweiten Ende (52) zugänglich gemacht wird, wobei die Übertragungsleitung (5) einen Lichtleiter oder eine Lichtfaser aufweist und der Zustandsempfänger (4) mindestens teilweise in der Schicht (10) Reibungsmaterial eingebettet ist, **dadurch gekennzeichnet, dass** das erste Reibungselement (1) einen ebenen Träger (11) aufweist, bei dem die Schicht (10) Reibungsmaterial auf einer Innenfläche (110) aufgebracht ist, und dass der Zustandsempfänger (4) aus der Innenfläche (110) des ebenen Trägers hervorsteht, und dass der Zustandsempfänger (4) und die Übertragungsleitung (5) für Lichtstrahlen, die vom zweiten Reibungselement (2) reflektiert werden, durchlässig sind.

2. Vorrichtung zur Aufnahme von kinetischer Energie nach dem vorhergehenden Anspruch, **dadurch gekennzeichnet, dass** sie ein zweites Reibungselement (2) aufweist, an welchem das erste Reibungselement (1) mit einer relativen Reibungsbewegung selektiv angelegt ist, und dass das zweite Reibungselement (2) mindestens teilweise aus einem dielektrischen Material besteht.

3. Vorrichtung zur Aufnahme von kinetischer Energie nach Anspruch 2, **dadurch gekennzeichnet, dass** das zweite Reibungselement (2) eine mindestens teilweise aus Keramik gefertigte Scheibe ist.

4. Vorrichtung zur Aufnahme von kinetischer Energie nach einem der vorhergehenden Ansprüche in Kombination mit dem Anspruch 1, **dadurch gekennzeichnet, dass** der Zustandsempfänger (4) einen optischen Einsatz mit einer aktiven Fläche (40) aufweist, die von der Innenfläche (110) des ebenen Trägers (11) durch einen Zwischenraum (D) getrennt ist, der einen Sicherheitsabstand für den Verschließ des ersten Reibungselement (1) darstellt.

5. Vorrichtung zur Aufnahme von kinetischer Energie nach einem der vorhergehenden Ansprüche, **dadurch gekennzeichnet, dass** der Verschleißsensor (3) einen Lichtintensitätsschwankungssensor (6) aufweist, der am zweiten Ende (52) des Lichtleiters oder der Lichtfaser (5) angeordnet ist.

6. Vorrichtung zur Aufnahme von kinetischer Energie nach einem der vorhergehenden Ansprüche, **dadurch gekennzeichnet, dass dadurch gekennzeichnet, dass** der Verschleißsensor (3) einen Lichtkoppler (7), der am Lichtleiter oder an der Lichtfaser angebracht ist, und eine Lichtquelle (8) aufweist, die mit dem Lichtleiter oder der Lichtfaser (5) über den Lichtkoppler (7) gekoppelt ist.

7. Vorrichtung zur Aufnahme von kinetischer Energie nach Anspruch 6, **dadurch gekennzeichnet, dass** der Koppler (7) und die Lichtquelle (8) am zweiten Ende (52) der Übertragungsleitung (5) angeordnet sind.

8. Verfahren zum Erfassen des Verschleißes für eine Vorrichtung zur Aufnahme von kinetischer Energie nach einem der vorhergehenden Ansprüche, die ein erstes Reibungselement (1) aufweist, das an ein zweites Reibungselement (2) mit einer relativen Bewegung mit dem ersten Reibungselement (1) angelegt ist, **dadurch gekennzeichnet, dass** es einen ersten Vorgang, bei dem eine undurchlässige Schicht (10), die durch gegenseitige Reibung des ersten und zweiten Reibungselements (1, 2) abgetragen werden kann, in einen Lichtweg zwischengelegt wird, und einen zweiten Vorgang umfasst, bei dem das Abtragen der undurchlässigen Schicht (10) durch Änderung der optischen Dichte des Lichtwegs erfasst wird.

9. Erfassungsverfahren nach Anspruch 8, **dadurch gekennzeichnet, dass** der erste Vorgang ausgeführt wird, indem eine Schicht (10) eines Reibungsmaterials als undurchlässige Schicht verwendet wird.
